# EUROPÄISCHE PATENTANMELDUNG

(11) **EP 4 509 290 A1**
(43) Veröffentlichungstag der Anmeldung: **19.02.2025**
(21) Anmeldenummer: 24192469.5
(22) Anmeldetag: 01.08.2024
(51) Int. Cl.: B29C 55/20, B29C 55/02

(54) **TEILÖFFNEREINRICHTUNG FÜR DAS VORÖFFNEN VON KLUPPEN**

(30) Priorität: 14.08.2023 DE 102023121737
(71) Anmelder: Brückner Maschinenbau GmbH, 83313 Siegsdorf (DE)
(72) Erfinder: Tobias, Häusl, 83278 Traunstein (DE)
(74) Vertreter: Flach Bauer & Partner Patentanwälte mbB

(57) **Zusammenfassung**

Die vorliegende Erfindung betrifft eine Teilöffnereinrichtung für das Voröffnen von Kluppen (Klemmfläche 38 und Messerklappe 39 davon dargestellt) einer Reckanlage. Die Teilöffnereinrichtung umfasst zumindest eine Teilöffnerscheibe (160) und einen Antrieb (nicht angezeigt), wobei der Antrieb dazu eingerichtet ist die zumindest eine Teilöffnerscheibe (160) anzutreiben. Die Teilöffnerscheibe (160) umfasst eine Mantelfläche (162), die eine umlaufende Kontaktfläche (164) aufweist, wobei die Kontaktfläche (164) dazu eingerichtet ist mit einer Messerklappe (39) einer Kluppe einzugreifen, wenn die Kluppe an der Teilöffnerscheibe (160) vorbeigeführt wird, sodass die Kluppe vorgeöffnet wird (bewegt sich um einen Weg X). Die Teilöffnerscheibe (160) kann um die Rotationsachse (161) rotierend angetrieben werden.

## Beschreibung

### Gebiet der Erfindung

Die vorliegende Erfindung betrifft eine Teilöffnereinrichtung für das Voröffnen von Kluppen, insbesondere von Kluppen einer Reckanlage, ein Öffnersystem für das Öffnen der Kluppen, eine Reckanlage, die ein solches Öffnersystem umfasst, sowie ein Verfahren zum Öffnen von Kluppen.

### Hintergrund

Reckanlagen finden insbesondere bei der Herstellung von Kunststofffolien bzw. gereckten Textilien Anwendung. Üblicherweise wird in solchen Anlagen die zu reckende Materialbahn, in der Regel eine Kunststofffolie, mittels Kluppeneinheiten bzw. Kluppen erfasst und durch die Anlage bewegt. Die Kluppen sind auf umlaufenden Führungsschienen verfahrbar angeordnet und werden zentral oder einzeln angetrieben.

Insbesondere wird die zu reckende Materialbahn, in einer Einlaufzone mittels der Kluppen erfasst, die auf beiden Seiten der zu reckenden Materialbahn auf umlaufendenden Führungsschienen verfahrbar angeordnet sind. Die Kluppen werden dabei nacheinander von einer Einlaufzone über eine Reckzone zu einer Auslaufzone und dann auf einem Rückweg wieder zur Einlaufzone verfahren, wobei die Folie in der Auslaufzone beispielsweise einer gewissen Relaxation und/ oder Wärmenachbehandlung unterzogen werden kann.

Um die Materialbahn in der Einlaufzone zu erfassen/zu greifen werden die Kluppen von einer geöffneten in eine geschlossene Stellung (Greifstellung) überführt. Typischerweise umfasst eine Kluppe zumindest zwei Klemmflächen, die sich im Wesentlichen gegenüberliegen und dem Greifen der Materialbahn dienen. Durch die Betätigung eines Hebels (der auch als Messerklappe bezeichnet wird) können die Klemmflächen bis in die Greifstellung aufeinander zu beweget werden. Zudem dient die Messerklappe dem Öffnen der Kluppe, um die Materialbahn nach dem Recken wieder freizugeben. Insbesondere müssen die Kluppen nach dem Recken wieder geöffnet werden. Das Öffnen erfolgt typischerweise nach dem Durchlaufen einer Weiterheiz- oder Kühlzone durch die die gereckte Folie mittels der Kluppen geführt wird. Nachdem die Kluppen auf einer umlaufenden Führungsschiene rückgeführt wurden, greifen sie die Materialbahn erneut (an andere Stelle) und durchlaufen anschließend wieder den Reckbereich der Reckanlage. Um die Materialbahn erneut greifen zu können, müssen die Kluppen geöffnet sein.

Bei bestehenden Reckanlagen, insbesondere bei Folienreckanlagen, erfolgt das Öffnen der Kluppen nicht immer zuverlässig, sodass die geöffnete Stellung der Kluppe nicht erreicht wird. In diesem Fall bleibt die Kluppe in einem teilgeöffneten Zustand oder schließt sich sogar wieder. Somit könnte diese Kluppe die Materialbahn nicht erneut greifen, sodass Schäden an der Anlage und/oder der zu reckenden Folie drohen. Um dies zu verhindern, werden oftmals mechanische Zwangsöffnereinrichtungen eingesetzt. Bekannte Zwangsöffnereinrichtungen, wie Öffnerräder oder Öffnerleisten, stellen einen Anschlag bereit, der an nicht vollständig geöffnete Kluppen bzw. geschlossenen Kluppen anschlägt, wenn diese Kluppen an der Zwangsöffnereinrichtung vorbeigeführt werden. Mittels des Anschlags werden die Kluppen zwangsweise geöffnet.

Dieses Anschlagen und schnelle Öffnen führt jedoch zu einer sehr hohen mechanischen Belastung, sodass die Standzeit der Kluppen deutlich reduziert wird. Bricht ein Teil der Kluppe, wie die Messerklappe oder ein anderer Teil des Greifmechanismus, aufgrund der Schlagbelastung kann es auch dazu kommen, dass andere Teile der Folienreckanlage beschädigt werden und/oder dass es zu Stillstandzeiten und somit zu Produktionsausfällen kommt.

Insbesondere bei sehr schnell laufenden Reckanlagen (Produktionsgeschwindigkeit beispielsweise >500m/min mit einer entsprechenden Kluppen-Fahrgeschwindigkeit) beispielsweise zur Herstellung von PET, PE, PP, PA Folien und dergleichen, wie BO-Anlagen, d.h. Anlagen auf denen die Folie in Quer- und Längsrichtung gereckt wird, sollen solche Zwangsöffnungen vermieden werden. Allerdings sinkt die Öffnungsrate bekannter magnetischer - und somit anschlagfreier - Öffnereinrichtungen mit zunehmender Kluppen-Fahrgeschwindigkeit. Zudem ist die Öffnungsrate bekannter anschlagfreier Öffnereinrichtungen oftmals unzureichend, wenn die Kluppen schwer zu öffnen sind. Dies ist u.a. bei großen Foliendicken, bei verklebten Messerklappen oder bei hohem Querfilmzug (d.h. bei hohen Querrecckräften) der Fall.

### Beschreibung der Erfindung

Es ist daher die Aufgabe der vorliegenden Erfindung eine Vorrichtung und ein Verfahren bereitzustellen, die ein zuverlässiges Öffnen der Kluppen - auch bei hohen Kluppen-Fahrgeschwindigkeiten und/oder schwer zu öffnenden Kluppen - ermöglicht.

Die Aufgabe wird insbesondere durch eine Teilöffnereinrichtung für das Voröffnen oder Restöffnen von Kluppen gemäß Anspruch 1, durch ein Öffnersystem für das vollständige Öffnen der Kluppen nach Anspruch 9, durch eine Reckanlage nach Anspruch 13 und durch ein Verfahren zum Öffnen von Kluppen nach Anspruch 15 gelöst. Weitere Aspekte der Erfindung sind in den abhängigen Ansprüchen sowie in der nachfolgenden Beschreibung aufgeführt.

Insbesondere wird die Aufgabe durch eine Teilöffnereinrichtung für das Voröffnen von Kluppen gelöst. Wobei die Kluppen einer Reckanlage, insbesondere einer Folienreckanlage sein können. Die Erfindung ist jedoch nicht auf Folienreckanlage beschränkt, sondern kann beispielsweise auch im Zusammenhang mit dem Recken von Textilen oder anderen Werkstoffen eingesetzt werden. Weitere Anwendungsgebiete sind ebenso möglich.

Die erfindungsgemäße Teilöffnereinrichtung öffnet die Kluppe nicht vollständig. D.h. die Kluppe wird mittels der Teilöffnereinrichtung nicht von der geschlossenen Stellung bis in die geöffnete Stellung überführt. Insbesondere kann die Teilöffnereinrichtung dazu eingerichtet sein, nur solche Kluppen, die einer Voröffnung bedürfen, um vollständig geöffnet zu werden vorzuöffnen, oder die Teilöffnereinrichtung kann dazu eingerichtet sein alle vorbeigeführten Kluppen vorzuöffnen.

Beim Voröffnen der Kluppen, wird die Kluppe durch die Teilöffnereinrichtung nur teilweise geöffnet. Beispielsweise führt die Teilöffnereinrichtung die Kluppe aus der geschlossenen Stellung, ohne die Kluppe vollständig zu öffnen. Der weitere Öffnungsvorgang wird anschließend von einer Öffnereinrichtung, vorzugsweise von einer berührungslosen Öffnereinrichtung (beispielsweise einer magnetischen Öffnereinrichtung) geleitet. In diesem Fall ist die Teilöffnereinrichtung der Öffnereinrichtung vorgeschalten, oder in einem vorderen Bereich der Öffnereinrichtung positioniert, sodass die Öffnereinrichtung die vorgeöffnete Kluppe übernehmen kann.

In einem ersten Anwendungsfall soll nur ein Teil der Kluppen vorgeöffnet werden, insbesondere der Teil der Kluppen, der beim Vorbeiführen an der Teilöffnerscheibe einen Öffnungsgrad aufweist, der unterhalb eines vordefinierten Öffnungsgrad liegt. In diesem Fall ist die Teilöffnereinrichtung in einem (vorderen) Bereich der Öffnereinrichtung positioniert. Der vordefinierte Öffnungsgrad kann in diesem Fall dem Öffnungsgrad entsprechen, in den die Öffnereinrichtung die Kluppen bei korrekter Funktion der Öffnereinrichtung überführt hätte.

Die Kluppen, die den vordefinierten Öffnungsgrad nicht aufweisen, werden dann beim Vorbeiführen durch die Teilöffnereinrichtung vorgeöffnet. Dass die Kluppen den vordefinierten Öffnungsgrad nicht aufweisen, kann beispielsweise darin begründet sein, dass die Kluppe (bzw. deren Messerklappe) schwergängig ist und/oder fest an dem Folienrand der zu verstreckenden Folie anhaftet. Die durch die Teilöffnereinrichtung vorgeöffneten Kluppen werden anschließend durch die eigentliche Öffnereinrichtung (beispielsweise eine magnetische Öffnereinrichtung) vollständig geöffnet.

In einem zweiten Anwendungsfall sollen alle Kluppen vorgeöffnet werden. Hierzu wird die Teilöffnereinrichtung vor der eigentlichen Öffnereinrichtung positioniert. Die vorbeigeführten Kluppen werden dann von der Teilöffnereinrichtung teilweise geöffnet, also vorgeöffnet, und im vorgeöffneten Zustand an die eigentliche, vorzugsweise magnetische, Öffnereinrichtung übergeben.

In einem weiteren Aspekt kann die Teilöffnereinrichtung für das Restöffnen von Kluppen vorgesehen sein. In diesem Fall ist die Teilöffnereinrichtung der Öffnereinrichtung nachgeschalten, oder in einem Bereich der Öffnereinrichtung positioniert. In diesem Fall übernimmt die Teilöffnereinrichtung die bereits teilweise geöffneten Kluppen von der Öffnereinrichtung und leitet den weiteren, abschließenden Öffnungsvorgang der bereits teilweise geöffneten Kluppen ein. Die Teilöffnereinrichtung kann die Kluppen beim Restöffnen bis über einen Kipppunkt oder sogar bis in die vollständig geöffnete Stellung führen. Als Kipppunkt wird hier ein Punkt verstanden, ab welchem - sofern er überschritten wird - sich die Kluppe bzw. die Messerklappe sicher vollständig öffnet.

Durch die Teilöffnereinrichtung kann also verhindert werden, dass (i) die Öffnereinrichtung die Kluppen nicht vollständig öffnet (insbesondere durch das Voröffnen) und/oder (ii) dass bereits (teilweise) geöffnete Kluppen im teilweise geöffneten Zustand verbleiben oder sich wieder schließen (insbesondere durch das Restöffnen).

Die Teilöffnereinrichtung umfasst zumindest eine Teilöffnerscheibe und einen Antrieb, wobei der Antrieb dazu eingerichtet ist die zumindest eine Teilöffnerscheibe anzutreiben. Die Teilöffnerscheibe wird durch den Antrieb insbesondere rotiert.

Die Teilöffnerscheibe umfasst eine Mantelfläche, wobei die Mantelfläche eine umlaufende Kontaktfläche aufweist. Diese Kontaktfläche ist dazu eingerichtet mit einer Messerklappe einer Kluppe einzugreifen, wenn die Kluppe an der Teilöffnerscheibe vorbeigeführt wird und wenn die Kluppe beim Vorbeiführen an der Teilöffnerscheibe einen Öffnungsgrad aufweist, der unterhalb eines vordefinierten Öffnungsgrad liegt, sodass die Kluppe vorgeöffnet oder optional restgeöffnet wird.

Im ersten Anwendungsfall, wenn also nur ein Teil der Kluppen vorgeöffnet werden soll, wird die Teilöffnereinrichtung im Bereich der Öffnereinrichtung, vorzugsweise in einem vorderen Bereich der Öffnereinrichtung, positioniert (Die Teilöffnereinrichtung ist also parallel zur Öffnereinrichtung geschaltet). Der vordefinierte Öffnungsgrad kann in diesem Fall dem Öffnungsgrad entsprechen, in den die Öffnereinrichtung die Kluppen bei korrekter Funktion der Öffnereinrichtung überführt hätte, wenn diese an der Teilöffnereinrichtung vorbeigeführt werden. Somit werden nur die vorbeigeführten Kluppen durch die Teilöffnereinrichtung vorgeöffnet, die bis dahin durch die Öffnereinrichtung nur ungenügend geöffnet wurden. Nach dem Passieren der Teilöffnereinrichtung sind dann alle Kluppen teilweise geöffnet (entweder, bei korrekter Funktionsweise, durch die Öffnereinrichtung, oder durch die Teilöffnereinrichtung), sodass die Öffnereinrichtung die Kluppen übernehmen und die verbleibende Öffnung durchführen kann. Die vorgeöffneten Kluppen werden also nach dem Vorbeiführen an der Teilöffnereinrichtung durch die Öffnereinrichtung weiter geöffnet.

Sollen alle Kluppen vorgeöffnet werden (zweiter Anwendungsfall), kann die Teilöffnereinrichtung der Öffnereinrichtung vorgeschalten sein. Der vordefinierte Öffnungsgrad kann in diesem Fall so bestimmt werden, dass er im Wesentlichen einer Schließstellung der Kluppe entspricht. Somit werden alle vorbeigeführten Kluppen durch die Teilöffnereinrichtung vorgeöffnet und die teilgeöffneten Kluppen werden der Öffnereinrichtung übergeben um vollständig geöffnet zu werden.

Sollen die Kluppen restgeöffnet werden, insbesondere der Teil der Kluppen, der beim Vorbeiführen an der Teilöffnerscheibe einen Öffnungsgrad aufweist, der unterhalb des vordefinierten Öffnungsgrad liegt, kann die Teilöffnereinrichtung im Bereich der Öffnereinrichtung positioniert sein (also parallel zur Öffnereinrichtung geschaltet sein) oder der Öffnereinrichtung nachgeschalten sein. Der vordefinierte Öffnungsgrad kann in diesem Fall dem Öffnungsgrad entsprechen, den die Kluppen typischerweise beim Verlassen der Öffnereinrichtung (bei korrekter Funktion der weiteren Öffnereinrichtung) aufweisen. Somit werden die vorbeigeführten Kluppen durch die Teilöffnereinrichtung restgeöffnet, die bis dahin durch die Öffnereinrichtung nur ungenügend geöffnet wurden. Die durch die Öffnereinrichtung ungenügend geöffneten Kluppen werden durch die Teilöffnereinrichtung schließlich restgeöffnet.

Der vordefinierte Öffnungsgrad kann beispielsweise zumindest 1%, oder zumindest 5% oder zumindest 10% oder zumindest 15 % für das Voröffnen und beispielsweise zumindest 85%, oder zumindest 90% oder zumindest 95% für das Restöffnen betragen. Der vordefinierte Öffnungsgrad kann insbesondere durch die Position der Teilöffnerscheibe eingestellt werden.

Durch das Voröffnen wird die Zeit zum Öffnen der Kluppe im Vergleich zu herkömmlichen Öffnereinrichtungen verlängert, sodass die Kluppen weniger stark mechanisch beansprucht werden. So kann nicht nur ein vollständiges Öffnen sichergestellt werden, sondern auch die Standzeit der Kluppen erhöht werden. Dies gilt analog für das Restöffnen.

Beim Voröffnen kommt es zu einem mechanischen Kontakt zwischen der Kontaktfläche der Teilöffnerscheibe und der Messerklappe der betreffenden Kluppe. Die Position und/oder der Durchmesser der Teilöffnerscheibe kann so gewählt sein, dass immer nur eine Kluppe mit der umlaufenden Kontaktfläche in Kontakt ist. Ebenso kann die Position und/oder der Durchmesser der Teilöffnerscheibe so gewählt sein, dass mehrere (zumindest zwei) Kluppen zeitgleich mit der umlaufenden Kontaktfläche in Kontakt sein können. Im Vergleich zu einer Zwangsöffnereinrichtung ist die mechanische Belastung jedoch deutlich reduziert, da die Kluppe nur teilgeöffnet wird und da aufgrund der angetriebenen Teilöffnerscheibe die Relativgeschwindigkeit zwischen der Kluppe bzw. deren Messerklappe und der Teilöffnerscheibe reduziert oder sogar auf null eingestellt werden kann.

Gemäß einem Aspekt der Erfindung kann die Teilöffnereinrichtung eine Kluppe im Bereich größer 0% bis zumindest 5% Öffnungsgrad voröffnen, bevorzugt bis zumindest 10% Öffnungsgrad und insbesondere bevorzugt zumindest 15% Öffnungsgrad. Gemäß einem Aspekt der Erfindung kann die (oder eine weitere) Teilöffnereinrichtung eine Kluppe ab einem Öffnungsgrad von zumindest 95%, bevorzugt zumindest 90% und insbesondere bevorzugt zumindest 85% restöffnen. Die Prozentangaben beziehen sich auf eine Wegstrecke, die die Klemmfläche(n) der Kluppe zurücklegen vom geschlossenen Zustand bis zum geöffneten Zustand.

Das Teilöffnen der Kluppen erlaubt ein zuverlässiges Öffnen der Kluppen, u.a. auch dann, wenn
- die Kluppe (bzw. die Messerklappe und/oder zumindest eine Klemmfläche) klemmt,
- zumindest eine Klemmfläche an der zu fördernden Materialbahn anhaftet und/oder verklebt
- Materialreste und/oder Ablagerungen das Öffnen der Kluppe erschweren, und/oder
- Aufgrund hoher Kluppen-Fahrgeschwindigkeiten die Massenträgheit der beweglichen Teile der Kluppe ein Öffnen der Kluppe erschweren.

Insbesondere kann der Antrieb dazu eingerichtet sein mit einer Kluppen-Fahrgeschwindigkeit synchronisiert zu werden. Die Synchronisierung des Antriebs mit der Kluppen-Fahrgeschwindigkeit kann so erfolgen, dass im Wesentlichen kein Schlupf zwischen den teils zu öffnenden Kluppen und der Teilöffnerscheibe besteht, oder es kann ein gewünschter Schlupf eingestellt werden. Beispielsweise kann der Antrieb so synchronisiert werden, dass die Kontaktfläche der Teilöffnerscheibe gegenüber einer teils zu öffnenden Kluppe einen Schlupf im Bereich von -10% bis +10%, vorzugsweise im Bereich von -5% bis +5% und insbesondere im Bereich von 0% bis +3% aufweist. Somit kann die mechanische Belastung beim Auftreffen der Kluppen (bzw. deren Messerklappe) auf der Kontaktfläche reduziert werden und das Voröffnen (bzw. Restöffnen) durch die Teilöffnerscheibe geführt werden. Die Standzeit der Kluppen und der Teilöffnerscheibe kann somit verlängert werden.

Der Antrieb kann ein direkter oder ein indirekter Antrieb sein. Beispielsweise kann der Antrieb einen Riemen- oder Kettentrieb und/oder einen Elektromotor, beispielsweise einen Synchronmotor umfassen.

Zudem kann eine Position der Teilöffnerscheibe in TD-Richtung und/oder MD-Richtung verstellbar sein. Somit kann auch der vordefinierte Öffnungsgrad eingestellt werden. Zum Verstellen der Position der Teilöffnerscheibe kann die Teilöffnereinrichtung zumindest eine Positioniervorrichtung umfassen, oder das Verstellen kann manuell erfolgen. Der zumindest eine Positioniervorrichtung kann beispielsweise zumindest einen Linearmotor und/oder eine Linearführung umfassen. Ebenso kann der Positioniervorrichtung ein Getriebe, wie beispielsweise eine Trapezgewindespindel umfassen, das eine rotierende Antriebsbewegung in eine lineare Bewegung umsetzt.

Der Begriff MD-Richtung steht für "Maschinenrichtung", während der Begriff TD-Richtung für "Querrichtung" steht. Die MD-Richtung bezieht sich auf die Richtung, in der die Materialbahn (insbesondere eine Kunststofffolie) durch die Reckanlage geführt wird. Es ist also die Hauptbewegungsrichtung entlang der Länge der Materialbahn. Die TD-Richtung hingegen bezieht sich auf die Richtung, die senkrecht zur MD-Richtung steht (in der Ebene der Materialbahn).

Weiterhin kann die Position der Teilöffnerscheibe in vertikaler Richtung verstellbar sein. Die vertikale Richtung ist eine Richtung, die vertikal auf der Ebene der Materialbahn steht. Somit könnte die Teilöffnerscheibe in drei Richtungen (MD, TD und vertikal) positioniert werden. Die Verstellung in vertikaler Richtung kann manuell erfolgen. Insbesondere kann die vertikale Position einmalig festgelegt werden (z.B. bei der Montage über Langlöcher), oder die vertikale Position kann manuell einstellbar sein. Hierzu kann eine Positioniervorrichtung vorgesehen sein.

Vorzugsweise ist die Position der Teilöffnerscheibe in MD-, TD- und/oder vertikaler Richtung unabhängig voneinander verstellbar. Hierzu können separat ansteuerbare/verstellbare Bewegungsachsen bzw. Positioniervorrichtungen vorgesehen sein.

Insbesondere kann die Teilöffnereinrichtung eine Steuereinrichtung umfassen, die Geschwindigkeit der Teilöffnerscheibe verändern kann. Hierzu kann die Steuereinrichtung den Antrieb steuern. So kann ein gewünschter Schlupf der Teilöffnerscheibe eingestellt werden.

Die optimale Position der Teilöffnerscheibe ist abhängig von der Filmranddicke der zu transportierenden Materialbahn. Die Filmranddicke ist dabei die Dicke, der Materialbahn (insbesondere Kunststofffolie) die zwischen den Klemmflächen der Kluppe in der geschlossenen Stellung gemessen werden kann, wenn die Kluppe die Materialbahn gegriffen hat. Da sich die Stellung der Messerklappe mit der Filmranddicke ändert, ändert sich auch die Position des Kontaktpunkts, d.h. des Punktes, an dem die Messerklappe als erstes mit der umlaufenden Kontaktfläche der Teilöffnerscheibe in Kontakt kommt. Durch die Positionierung der Teilöffnerscheibe in MD-, TD und/oder vertikaler Richtung kann ein gewünschter Kontaktpunkt (und mithin ein vordefinierter Öffnungsgrad, bei dessen unterschreiten es zum Vor- oder Restöffnen kommt) eingestellt werden, in Abhängigkeit der Filmranddicke, sodass beim Voröffnen und/oder Restöffnen möglichst geringe mechanische Belastungen auftreten und die Kluppen sicher geöffnet werden können.

Zum idealen Voröffnen wird die Teilöffnerscheibe beispielsweise so positioniert, dass eine berührungslose Öffnereinrichtung (z.B. eine magnetische Öffnereinrichtung) die Möglichkeit hat die vorgeöffnete Kluppe im Anschluss zuverlässig vollständig zu öffnen. Nach dem Voröffnen übernimmt die berührungslose Öffnereinrichtung die vorgeöffneten Kluppen und führt den Öffnungsvorgang weiter. Die Übergabe der Kluppen erfolgt vorzugsweise so, dass der Öffnungsvorgang fortgesetzt wird, d.h. bevor sich die vorgeöffneten Kluppen wieder beginnen sich zu schließen. Ebenso wird zum idealen Restöffnen die Teilöffnerscheibe beispielsweise so positioniert, dass eine parallele oder vorlaufende berührungslose Öffnereinrichtung (z.B. eine magnetische Öffnereinrichtung) die bereits weitestgehend geöffneten Kluppen oder nicht ordnungsgemäß geöffneten Kluppen an die Teilöffnereinrichtung übergibt, welche sodann die Restöffnung ausführt. Wie oben ausgeführt ist, kann die Teilöffnereinrichtung dazu eingerichtet sein nur solche Kluppen vorzuöffnen, die einer Voröffnung bedürfen, um anschließend durch die Öffnereinrichtung vollständig geöffnet zu werden (erster Anwendungsfall), oder die Teilöffnereinrichtung kann dazu eingerichtet sein alle vorbeigeführten Kluppen vorzuöffnen (zweiter Anwendungsfall).

Beispielsweise kann zur Positionierung der Teilöffnerscheibe die Filmranddicke in eine Bedienoberfläche einer Recheneinrichtung eingegeben werden. Anschließend kann die ideale Position der Teilöffnerscheibe berechnet werden und die Teilöffnerscheibe entsprechend manuell positioniert werden.

Insbesondere kann die Kontaktfläche der Teilöffnerscheibe einen konturierten Querschnitt aufweisen. Dieser konturierte Querschnitt kann an einen Kontaktbereich einer Messerklappe einer teils zu öffnenden Kluppe angepasst sein, vorzugsweise derart, dass eine Position des Kontaktpunktes in MD-Richtung unabhängig von der Filmranddicke der von der teils zu öffnenden Kluppe gehaltenen Materialbahn (z.B. Folie) ist. Die Kontur erlaubt es eine ideale Vor- und/oder Restöffnung zu erzielen und dabei kleinere Schwankungen in der Filmranddicke auszugleichen, ohne dass die Teilöffnerscheibe neu bzw. nach positioniert werden muss.

Die Teilöffnerscheibe kann eine polymere oder eine metallische Teilöffnerscheibe sein. Beispielsweise kann die Teilöffnerscheibe eine hochtemperatur Polymer Teilöffnerscheibe, insbesondere eine PEEK-Teilöffnerscheibe sein. Ist die Teilöffnerscheibe eine metallische Teilöffnerscheibe kann deren Mantelfläche optional zumindest teilweise beschichtet sein. Die Beschichtung kann beispielweise eine Polymerbeschichtung (insbesondere PEEK) umfassen. So können Verschleiß und die mechanische Belastung auf die Messerklappe und die Teilöffnerscheibe weiter minimiert werden.

Die Aufgabe wird weiterhin durch ein Öffnersystem für das Öffnen von Kluppen, insbesondere von Kluppen einer Reckanlage, gelöst. Das Öffnersystem umfasst zumindest eine Teilöffnereinrichtung der obenstehenden Art und eine magnetische Öffnereinrichtung, wobei die magnetische Öffnereinrichtung dazu eingerichtet ist die Kluppen mittels Magnetkraft zu öffnen, wenn die Kluppen an der magnetischen Öffnereinrichtung vorbeigeführt werden. Die Magnetkraft kann mittels zumindest eines Permanentmagneten und/oder mittels zumindest eines Elektromagneten erzeugt werden.

Weiterhin ist die zumindest eine Teilöffnereinrichtung in MD-Richtung so positioniert, um eine Voröffnung der Kluppen vorzunehmen.

Zum Voröffnen ist die Teilöffnereinrichtung beispielsweise vor einem Wirkbereich und/oder zumindest teilweise in einem Wirkbereich der magnetischen Öffnereinrichtung positioniert, d.h. die Teilöffnereinrichtung ist der magnetischen Öffnereinrichtung vorgelagert oder in deren Bereich positioniert. Überlappen sich der Wirkbereich der magnetischen Öffnereinrichtung und die Teilöffnereinrichtung, können die vorgeöffneten Kluppen auf einfache Weise an die magnetische Öffnereinrichtung übergeben werden bzw. können nur diejenigen Kluppen vorgeöffnet werden, die beim Vorbeiführen an der Teilöffnerscheibe einen Öffnungsgrad aufweisen, der unterhalb eines vordefinierten Öffnungsgrad liegt. Hier ist der vordefinierten Öffnungsgrad vorzugsweise so gewählt, dass er einem Öffnungsgrad entspricht, den die Kluppen durch die reguläre Öffnung mittels der magnetischen Öffnereinrichtung erreicht hätten. In diesem Fall würde die Teilöffnereinrichtung also sicherstellen, dass nach dem Passieren der Teilöffnereinrichtung alle Kluppen eine gewissen (vorgeöffneten) Öffnungsgrad aufweisen.

Weiterhin kann eine Teilöffnereinrichtung in MD-Richtung so positioniert sein, um eine Restöffnung der Kluppen vorzunehmen. Zum Restöffnen ist die Teilöffnereinrichtung beispielsweise nach einem Wirkbereich und/oder zumindest teilweise in einem Wirkbereich der magnetischen Öffnereinrichtung positioniert. Überlappen sich der Wirkbereich der magnetischen Öffnereinrichtung und die Teilöffnereinrichtung, können die bereits teilweise aber noch nicht vollständig geöffneten Kluppen auf einfache Weise an die Teilöffnereinrichtung übergeben werden. In diesem Fall ist der vordefinierten Öffnungsgrad vorzugsweise so gewählt, dass er einem Öffnungsgrad entspricht, den die Kluppen typischerweise beim Verlassen der magnetischen Öffnereinrichtung erreicht hätten. Durch das Restöffnen kann die Teilöffnereinrichtung sicherstellen, dass nach dem Passieren der Teilöffnereinrichtung alle Kluppen geöffnet sind.

Der Wirkbereich der magnetischen Öffnereinrichtung ist der Bereich, in dem eine Magnetkraft auf die Messerklappe der Kluppen wirkt, die ausreicht um die Messerklappe zu betätigen.

Insbesondere kann die zumindest eine Teilöffnereinrichtung derart relativ zur magnetischen Öffnereinrichtung positioniert sein, dass der Kontaktpunkt der Teilöffnerscheibe in MD-Richtung in einem vorderen Bereich, insbesondere in einem vorderen Drittel der magnetischen Öffnereinrichtung positioniert ist (bezogen auf eine Länge L des Wirkbereichs der magnetischen Öffnereinrichtung).

Weiterhin kann die zumindest eine Teilöffnereinrichtung derart relativ zur magnetischen Öffnereinrichtung positioniert sein, dass der Kontaktpunkt der Teilöffnerscheibe in einem Abstand d vor oder nach einem Punkt angeordnet ist, an dem eine maximale Magnetkraft auf die zu öffnenden Kluppen wirkt. Insbesondere kann der Abstand d im Bereich von L bis L/2 liegen, bevorzugt im Bereich von L bis L/3 und insbesondere bevorzug im Bereich von L bis L/5 mm, wobei L die Länge des Wirkbereichs der der magnetischen Öffnereinrichtung angibt.

Der Abstand ist dabei vorzugsweise so gewählt, dass die Teilöffnerscheibe im Bereich kurz vor/nach der maximalen Magnetkraft eingreift, weil nach Überschreitung der maximalen Magnetkraft ein Öffnen der Kluppen durch die magnetische Öffnereinrichtung nicht mehr erfolgen wird. Zudem kann die teilweise geöffnete Kluppe so von der Teilöffnereinrichtung übergeben bzw. übernommen werden, dass sich die Kluppe weiter öffnet, also bevor sich die Kluppe wieder zu schließen beginnt, jedenfalls aber bevor die Kluppe wieder geschlossen ist.

Weiterhin kann das Öffnersystem eine mechanische Zwangsöffnereinrichtung umfassen, wobei die mechanische Zwangsöffnereinrichtung in Bewegungsrichtung der Kluppen nach der magnetischen Öffnereinrichtung und der Teilöffnereinrichtung angeordnet ist. Die Zwangsöffnereinrichtung stellt sicher, dass die Kluppen ohne Ausnahme geöffnet sind, bevor diese die Materialbahn wieder greifen. Im Normalbetrieb ist das Öffnersystem so eingestellt, dass die Öffnung über die Teilöffnereinrichtung und die magnetische Öffnereinrichtung erfolgt und ausreichend ist. Die Zwangsöffnereinrichtung dient nur als Backup-Lösung, die beispielsweise bei einem Ausfall der Teilöffnereinrichtung zum Einsatz kommt. Die Zwangsöffnereinrichtung kann eine Öffnerleiste oder ein konventionelles Öffnerrad sein.

Eine Öffnerleiste steht fix. Wird eine nicht oder nur teilweise geöffnete Kluppe an der Öffnerleiste vorbeigeführt, schleift die Messerklappe an der Öffnerleiste und wird so betätigt, dass sich die Kluppe zwangsgeführt vollständig öffnet. Ein Öffnerrad öffnet die Kluppe ebenfalls vollständig. Beim vorbeiführen der Kluppen an dem stationären Öffnerrad betätigt das Öffnerrad die Messerklappe und öffnet so die Kluppe vollständig.

Weiterhin wird die Aufgabe durch eine Reckanlage, insbesondere eine Quer-, Längs- und/oder Simultan-Reckanlage gelöst, die eine Vielzahl von Kluppen zum Greifen einer zu reckenden Materialbahn (z.B. Folie) umfasst. Zudem umfasst die Reckanlage zumindest ein Öffnersystem der vorgenannten art. Typischerweise werden die Kluppen auf zumindest zwei Schienen umlaufend geführt, wobei die zu reckende Materialbahn zwischen den Schienen angeordnet ist. Jeder der Schienen kann ein Öffnersystem zugeordnet sein.

Bei Längsreckanlagen wird die Materialbahn in Längsrichtung (MD-Richtung) gereckt. Bei Querreckanlagen wird die Materialbahn in Querrichtung (TD-Richtung) gereckt. Längs- und Querreckanlagen sind oft kombiniert, sodass zuerst eine Längsreckung und anschließend eine Querreckung (oder andersherum) erfolgt. Bei Simultanreckanlagen erfolgt die Reckung in Längs- und Querrichtung gleichzeitig.

Die Reckanlage kann eine Folienreckanlage sein, insbesondere zur Reckung von Kunststofffolien, wie PET, PE, PP, PA und/oder dergleichen. Die Endfilmdicken der gereckten Folien können im Bereich von 2 bis 200 µm, bevorzugt im Bereich von 2 bis 100 µm und insbesondere im Bereich von 2 bis 50 µm liegen. Die Kluppen-Fahrgeschwindigkeit ist beispielsweise größer als 400 m/min, vorzugsweise größer als 500 m/min und insbesondere bevorzugt größer als 600 m/min.

Weiterhin wird die Aufgabe durch ein Verfahren zum Öffnen von Kluppen, insbesondere von Kluppen einer Reckanlage gelöst, wobei das Verfahren folgendes umfasst:
- Voröffnen von Kluppen, mittels zumindest einer Teilöffnereinrichtung wie oben beschrieben und
- Öffnen der Kluppen mit einer magnetischen Öffnereinrichtung,
- optional Zwangsöffnen der Kluppen mit einer mechanischen Zwangsöffnereinrichtung, nachdem die Kluppen an der Teilöffnereinrichtung und der magnetischen Öffnereinrichtung vorbeigeführt wurden, ohne dass eine erfolgreiche Öffnung erfolgte.

Neben dem Voröffnen können die Kluppen auch restgeöffnet werden. Das Verfahren erlaubt das zuverlässige und verschleißarme Öffnen der Kluppen, sodass hohe Standzeiten realisiert werden können.

### Kurze Beschreibung der Zeichnungen

Weitere Merkmale und Vorteile der Erfindung ergeben sich aus der nachfolgenden Beschreibung sowie aus dem beigefügten Zeichnungen, auf die Bezug genommen wird. In den Zeichnungen zeigen:
- Fig. 1: eine schematische Darstellung einer Reckanlage;
- Fig. 2: eine weitere schematische Darstellung einer Reckanlage;
- Fig. 3: eine schematische Darstellung einer Kluppeneinheit;
- Fig. 4: eine schematische Detaildarstellung einer Kluppeneinheit;
- Fig. 5: eine schematische Darstellung eines Öffnersystems;
- Fig. 6: eine schematische Darstellung einer Teilöffnerscheibe einer Teilöffnereinrichtung;
- Fig. 7: eine schematische Darstellung einer Teilöffnereinrichtung, und
- Fig. 8: Ablaufdiagramm eines Verfahrens zum Öffnen von Kluppen.

### Ausführliche Beschreibung der Zeichnungen

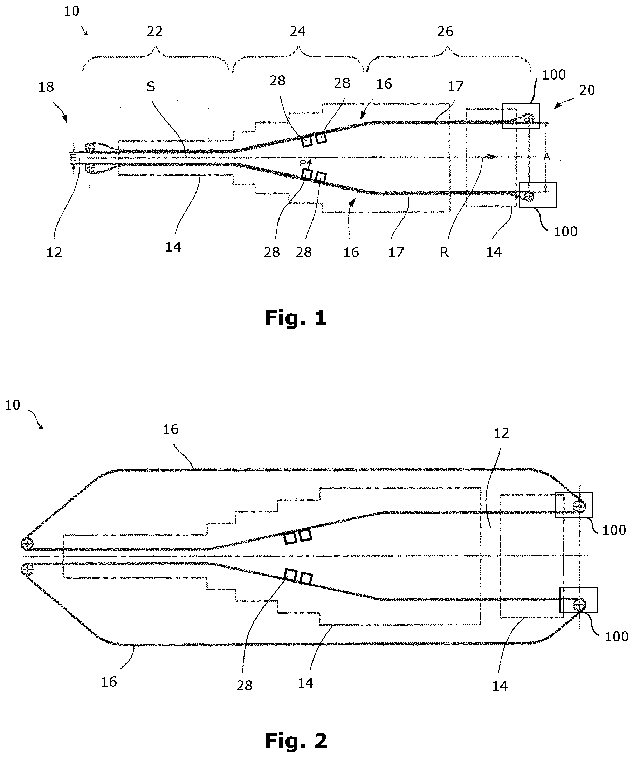

Fig. 1 und Fig. 2 zeigen jeweils eine exemplarische Reckanlage 10. Die Reckanlage 10 weist einen Ofen 14 sowie zwei Antriebssysteme 16 auf. Die Antriebssysteme 16 sind hier gegenüber einer Symmetrieachse S der Reckanlage 10 spiegelsymmetrisch angeordnet und erstrecken sich zumindest teilweise im Ofen 14. In einer Einlaufzone 18 sowie einer Auslaufzone 20, in denen eine Materialbahn 12 der Reckanlage 10 zu- bzw. abgeführt wird, verlaufen die Antriebssysteme 16 außerhalb des Ofens 14. Es versteht sich, dass die die Antriebssysteme 16 auch vollständig innerhalb des Ofens 14 geführt werden können.

Neben der Einlaufzone 18 und der Auslaufzone 20 weist die Reckanlage zumindest drei weitere Zonen 22, 24, 26 auf. Die Zonen 22, 24, 26 grenzen aneinander an, sodass - entlang der üblichen Bewegungs- bzw. Abzugsrichtung R der Reckanlage 10 betrachtet - an die Einlaufzone 18 zunächst die erste Zone 22, dann die zweite Zone 24, dann die dritte Zone 26, und schließlich die Auslaufzone 20 anschließt.

In der an die Einlaufzone 18 angrenzenden ersten Zone 22 der Reckanlage 10, auch Vorheizzone genannt, haben die Antriebssysteme 16 einen ersten Abstand zueinander. Nach der Wärmebehandlungszone 26 können sich weitere Zonen anschließen. Ebenso können zwischen den beschriebenen Zonen 22, 24, 26 weitere Zonen vorgesehen sein. Beispielsweise kann nach der Wärmebehandlungszone 26 eine Kühlzone vorgesehen sein, in welcher die gereckte und wärmebehandelte Folie weiter abgekühlt wird.

In der zweiten Zone 24, auch Reckzone genannt, vergrößert sich der Abstand der beiden Antriebssysteme 16 zueinander, bis schließlich zu Beginn der dritten Zone 26, auch Wärmebehandlungszone genannt, ein zweiter Abstand erreicht ist.

Jedes der Antriebssysteme 16 umfasst eine Schiene 17, an der eine Vielzahl von Kluppeneinheiten 28 geführt sind. Die Kluppeneinheiten 28 können durch einen Antrieb des jeweiligen Antriebssystems 16 entlang der Schiene 17 bewegt werden. Ebenso ist es möglich, dass die Kluppen direkt angetrieben sind. In diesem Fall sind die Schienen 17 beispielsweise als Linearmotor ausgebildet.

In Fig. 1 und 2 sind jeweils nur zwei Kluppeneinheiten 28 pro Antriebssystem 16 symbolisch dargestellt. Die Reckanlage 10 weist jedoch eine Vielzahl von Kluppeneinheiten 28 auf, die entlang der Schienen 17 angeordnet sind.

Die Schienen 17 der jeweiligen Antriebssysteme 16 beschreiben eine geschlossene Bahn von der Einlaufzone 18 zur Auslaufzone 20 und zurück. Der Schienenabschnitt, der den Vorlauf bildet, erstreckt sich in vorgesehener Bewegungsrichtung der Kluppeneinheiten 28 zwischen der Einlaufzone 18 und der Auslaufzone 20 innerhalb des Ofens 14.

Der Schienenabschnitt, der in üblicher Betriebsrichtung von der Auslaufzone 20 zur Einlaufzone 18 verläuft und den Rücklauf bildet, ist im gezeigten Ausführungsbeispiel (Fig. 1) ebenfalls innerhalb des Ofens 14 angeordnet. Er kann jedoch auch, wie in der Ausführungsform nach Figur 2 gezeigt, außerhalb des Ofens 14 angeordnet sein.

Zum Betrieb der Reckanlage 10 wird die zu reckende Materialbahn 12 in der Einlaufzone 18 der Reckanlage 10 in Abzugsrichtung R zugeführt. Hierzu wird die Materialbahn 12 mittels ihrer in Abzugsrichtung R verlaufenden Kanten an beiden Antriebssysteme 16 befestigt.

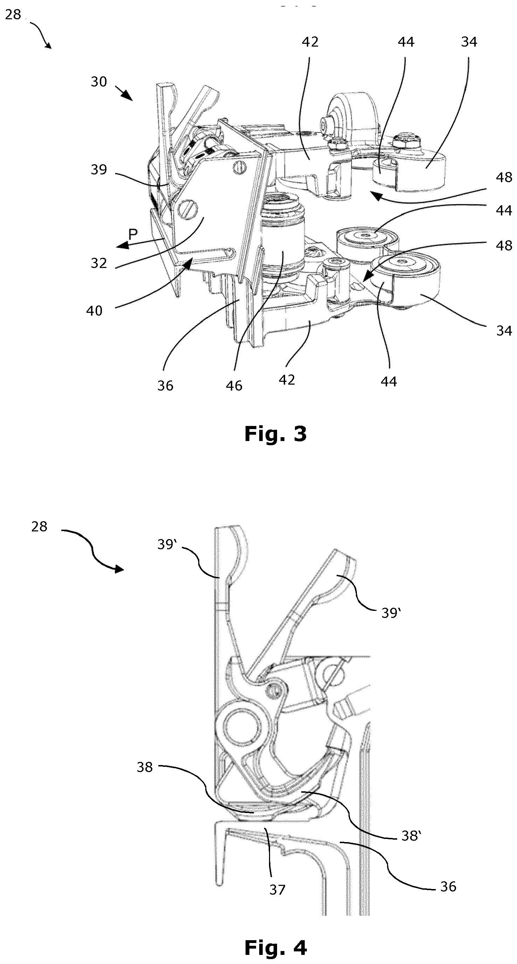

Genauer gesagt werden die Ränder der Materialbahn 12 (beispielsweise ein Folienrand) durch eine Klemmvorrichtung 30 (Fig. 3) der Kluppeneinheiten 28 fixiert und somit durch die Bewegung der Kluppeneinheiten 28 entlang der Schienen 17 des Antriebssysteme 16 in Abzugsrichtung (MD-Richtung) bewegt.

In der Einlaufzone 18 hat die Materialbahn 12 eine Breite E senkrecht zur Abzugsrichtung R, die in etwa dem ersten Abstand zwischen den Antriebssystemen 16 entspricht.

Die Materialbahn 12 wird dann durch die erste Zone 22 geführt und dort erwärmt. In der anschließenden zweiten Zone 24, also der Reckzone, wird die Materialbahn 12 gereckt, da sich der Abstand der Antriebssysteme 16 kontinuierlich, in TD-Richtung und optional auch in MD-Richtung, vergrößert. Zum Ende der zweiten Zone 24 weist die Materialbahn 12 eine zweite Breite A auf.

Nach erfolgter Reckung durchläuft die Materialbahn 12 nun die dritte Zone 26, bei der eine Relaxierung der Materialbahn 12 erfolgen kann, bevor die Materialbahn 12 in der Auslaufzone 20 nach vorheriger Kühlung von den Kluppeneinheiten 28 gelöst wird und sie die Reckanlage 10 mit der Breite A verlässt.

Beispielsweise ist die Reckanlage 10 eine Quer-Reckanlage. Denkbar ist auch, dass die Reckanlage 10 eine Längsreckanlage ist, in der die Materialbahn in Längsrichtung (also in Abzugsrichtung R) gereckt wird.

Zudem kann die Reckanlage 10 eine Simultanreckanlage sein, in der die Materialbahn 12 in der zweiten Zone 24, also der Reckzone, nicht nur in Richtung quer zur Abzugsrichtung R sondern auch in der Abzugsrichtung R gereckt werden kann.

Während der Verarbeitung der Materialbahn 12 wirken vor allem in der zweiten Zone 24, also der Reckzone, auf die Kluppeneinheiten 28 große Zugkräfte in eine Zugrichtung. Die Zugrichtung hat eine überwiegende Komponente in eine Primärrichtung P der Kluppeneinheiten 28 und eine kleinere Komponente quer zur Primärrichtung P.

Die Kluppeneinheiten 28 müssen so ausgebildet sein, um die hohen auftretenden Zugkräfte auszuhalten, insbesondere in ihrer Primärrichtung P. Die Primärrichtung P ist dabei diejenige horizontale Richtung, die quer zu einer in der Kluppeneinheit 28 aufgenommenen Kante der Materialbahn 12 verläuft.

Um diese Zugkräfte zuverlässig aufzunehmen, werden die Kluppeneinheiten bzw. Kluppen 28 in der Einlaufzone 18 geschlossen und greifen die Materialbahn 12. In der Auslaufzone werden die Kluppen wieder geöffnet und die gereckte Materialbahn 12 wird ausgekluppt. Zum Öffnen der Kluppen sind Öffnersysteme 100 vorgesehen, sodass die Kluppen im geöffneten Zustand in der Einlaufzone 18 eintreffen.

In Fig. 3 ist eine der Kluppen bzw. Kluppeneinheiten 28 beispielhaft in einer perspektivischen Ansicht dargestellt. Fig.4 ist eine Detailansicht (Seitenansicht) der Kluppe 28. Die Kluppeneinheit 28 weist ein Hauptteil 32 sowie zwei Führungsteile 34 auf. Der Hauptteil 32 hat einen Grundkörper 36 und weist die eigentliche Klemmvorrichtung 30 auf, welche die Materialbahn 12 greift.

Die Seite des Grundkörpers 36, die an der die Klemmvorrichtung 30 vorgesehen ist, wird auch Materialseite genannt. Die andere Seite, d. h. die Seite des Grundkörpers 36 ohne die Klemmvorrichtung 30, wird Führungsseite genannt, da an dieser Seite die Führungsteile 34 befestigt sind. Diese Führungsteile 34 laufen auf den Schienen 17 der Antriebssysteme 16. Dementsprechend weist auch das Hauptteil 32 eine Materialseite und eine Führungsseite auf.

Die Klemmvorrichtung 30 ist im gezeigten Ausführungsbeispiel aus Abschnitten des Grundkörpers 36, insbesondere einer integral ausgeführten unteren Klemmfläche 37 und einer am Grundkörper 36 rotierbar befestigten Messerklappe 39, die eine obere Klemmfläche 38 umfasst in an sich bekannter Weise ausgebildet.

Die Klemmvorrichtung 30 definiert einen Befestigungsabschnitt 40 bzw. Befestigungsmund, in den der zu befestigende Rand der Materialbahn 12 eingeführt und mittels der oberen Klemmfläche 38 an der Kluppeneinheit 28 fixiert werden kann.

Die Primärrichtung P der Kluppeneinheit 28 ist senkrecht zum Rand bzw. der Kante der Materialbahn, die in der Kluppeneinheit 28 fixiert ist. Die Primärrichtung P verläuft beispielsweise in der Figur 3 im Wesentlichen nach links. Eine befestigte Materialbahn 12 übt in der zweiten Zone 24 (Reckzone) eine Zugkraft in der Zugrichtung, vornehmlich in der Primärrichtung P, auf die Kluppeneinheit 28 aus.

Die Führungsteile 34 weisen jeweils einen Grundkörper 42 sowie jeweils wenigstens ein Führungselement 44 auf, das am Grundkörper 42 befestigt ist. In der in Fig. 3 beispielhaft dargestellten Kluppeneinheit 28 weisen die Führungsteile 34 zudem ein Antriebselement 46 auf, das beispielsweise eine Kette bzw. Teile einer Kette des Antriebssystems 16 sind bzw. ist. Das Antriebselement 46 kann auch ein Eingriffsvorsprung für einen Riemen des Antriebssystems 16 oder Teil eines Linearmotors sein.

Im gezeigten Ausführungsbeispiel sind die Führungselemente 44 als Rollen ausgebildet. Die Führungselemente 44 können in anderen Ausführungsformen jedoch auch Gleitelemente und/oder magnetische Elemente, wie ein Permanentmagnet oder ein ferromagnetisches Gegenstück, sein.

Die Führungsteile 34 definieren eine Aufnahme 48 für die Schiene 17 (auch Führungsschiene genannt). Insbesondere können in den Grundkörpern 42 der Führungsteile 34 je eine Ausnehmung vorgesehen sein, in die die Schiene 17 eingreift.

Die Aufnahme 48 ist dementsprechend vor bzw. auf der Führungsseite des Hauptteils 32 angeordnet. Die Führungselemente 44, insbesondere Rollen und ggf. Gleitelemente, können in die Aufnahme 48 hineinragen und an der Schiene 17 anliegen und als Führung an der Schiene dienen.

In Fig. 4 ist insbesondere die Klemmvorrichtung 30 der Kluppe/Kluppeneinheit 28 dargestellt. Die untere Klemmfläche 37 ist Teil des Grundkörpers 36 und starr ausgeführt. Die obere Klemmfläche 38 ist beweglich und kann von einer geschlossenen Stellung in eine offene Stellung bewegt werden. Hierzu wird die Messerklappe 39 betätigt. Mit den Bezugszeichen 38 und 39 sind die obere Klemmfläche und die Messerklappe bezeichnet, in einer geschlossenen Stellung. Die Bezugszeichen 38' und 39' bezeichnen die obere Klemmfläche und die Messerklappe in einer geöffneten Stellung.

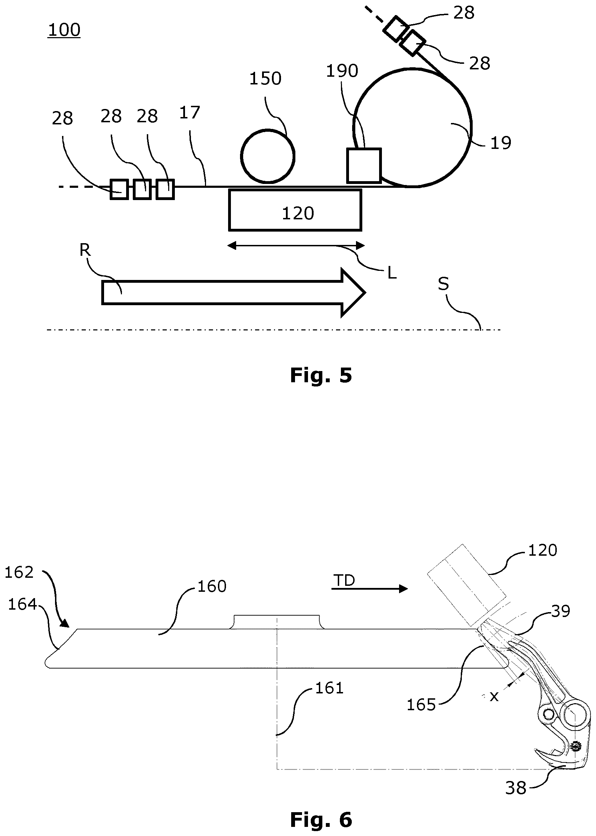

In Fig. 5 ist schematisch ein Öffnersystem 100 für das Öffnen von Kluppen 28, insbesondere von Kluppen einer Reckanlage 10 gezeigt. Das Öffnersystem 100 umfassend eine Teilöffnereinrichtung 150 sowie eine magnetische Öffnereinrichtung 120. Die magnetische Öffnereinrichtung 120 ist eingerichtet die Kluppen 28 mittels Magnetkraft zu öffnen, wenn die Kluppen 28 auf der Schiene 17 an der magnetische Öffnereinrichtung vorbeigeführt werden.

Die Teilöffnereinrichtung 150 ist in MD-Richtung in einem vorderen Bereich, insbesondere in einem vorderen Drittel (bezogen auf die Länge L des Wirkbereichs der magnetischen Öffnereinrichtung 120) der magnetischen Öffnereinrichtung 120 positioniert.

Wie hier gezeigt ist, überlappt der Wirkbereich der magnetischen Öffnereinrichtung 120 mit der Teilöffnereinrichtung 150, sodass die vorgeöffneten Kluppen 28 auf einfache Weise von der Teilöffnereinrichtung 150 an die magnetische Öffnereinrichtung 120 übergeben werden können. Je nach Anwendungsfall kann die Teilöffnereinrichtung 150 dazu eingerichtet sein nur solche Kluppen 28 vorzuöffnen, die einer Voröffnung bedürfen, um anschließend durch die magnetische Öffnereinrichtung 120 vollständig geöffnet zu werden (erster Anwendungsfall), oder die Teilöffnereinrichtung 150 kann dazu eingerichtet sein alle vorbeigeführten Kluppen 28 vorzuöffnen (zweiter Anwendungsfall).

In dem hier gezeigten Beispiel werden die Kluppen 28 in der Auslaufzone 20 mittels des Öffnersystems 100 geöffnet und über die Umlenkung 19 auf der Schiene 17 in die Einlaufzone 18 zurückgeführt um dort erneut die Materialbahn 12 zu greifen.

Konnten die Kluppen 28, beispielsweise aufgrund einer Fehlfunktion der Teilöffnereinrichtung 150 und/oder der magnetischen Öffnereinrichtung 120 nicht erfolgreich geöffnet werden, kann eine Zwangsöffnereinrichtung 190 vorgesehen sein, die das Öffnen der Kluppen vor dem erneuten Erreichen der Einlaufzone 18 erzwingt.

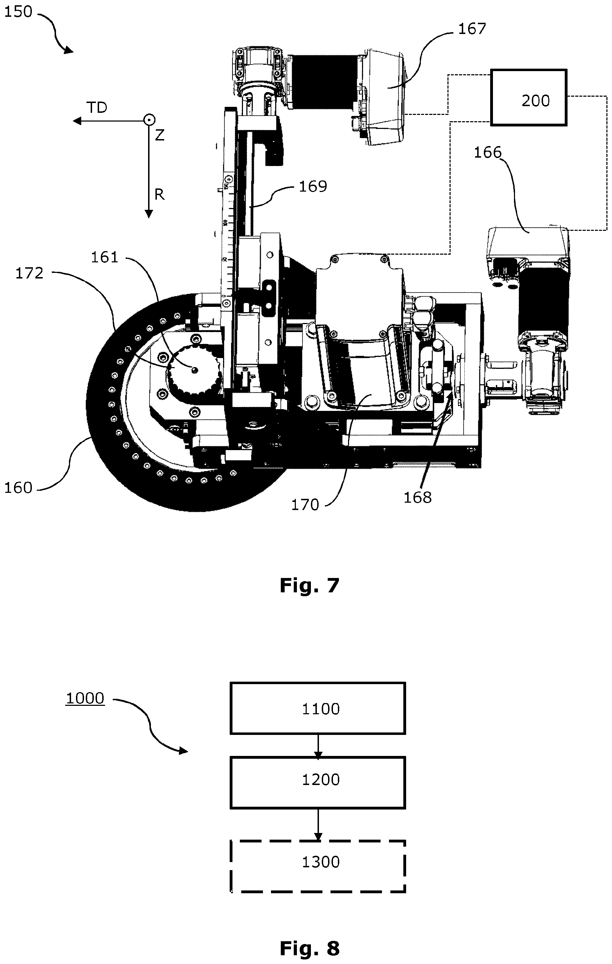

Fig. 6 zeigt eine schematische Darstellung einer Teilöffnerscheibe 160 einer Teilöffnereinrichtung 150, wie sie beispielsweise in Fig. 7 dargestellt ist. Die Teilöffnerscheibe 160 kann um die Rotationsachse 161 rotierend angetrieben werden.

Die Teilöffnerscheibe 160 umfasst eine Mantelfläche 162, die eine umlaufende Kontaktfläche 164 aufweist. Diese Kontaktfläche 164 greift mit einer Messerklappe 39 einer Kluppe 28 ein, wenn die Kluppe 28 an der Teilöffnerscheibe 160 vorbeigeführt wird, sodass die Kluppe 28 vor- oder restgeöffnet wird. Im hier gezeigten Beispiel wird die Messerklappe 39 der Kluppe durch die Teilöffnerscheibe 160 so betätigt, dass sich die obere Klemmfläche 38 der Kluppe von einer geschlossenen Stellung in eine teils geöffnete Stellung bewegt. Die Kluppe wird also vorgeöffnet und anschließend an eine magnetische Öffnereinrichtung 120 zur weiteren Öffnung übergegen.

Ebenso ist es möglich, dass die Messerklappe 39 der Kluppe durch die Teilöffnerscheibe 160 so betätigt, dass sich die obere Klemmfläche 38 der Kluppe von einer teils geöffneten Stellung in eine vollständig geöffnete Stellung bewegt. Die Kluppe wird also restgeöffnet nachdem sie von der magnetischen Öffnereinrichtung 120 übernommen wurde.

Wie in Fig. 6 gezeigt ist, ist die Teilöffnerscheibe in MD- und TD-Richtung so positioniert, dass die Messerklappe 39 vom Zeitpunkt des ersten Kontakts mit der Teilöffnerscheibe 160 am Kontaktpunkt 165 bis zum Abheben von der Teilöffnerscheibe 160 um einen Weg X bewegt bzw. betätigt wird. Der Weg X bzw. die Position der der Teilöffnerscheibe 160 kann so bemessen sein, dass die Kluppe in einem Bereich von größer 0% bis zumindest 5% bevorzugt bis zumindest 10% und insbesondere bevorzugt zumindest 15% Öffnungsgrad vorgeöffnet wird. Ebenso kann der Weg X bzw. die Position der Teilöffnerscheibe 160 so bemessen sein, dass eine Kluppe ab einem Öffnungsgrad von zumindest 95%, bevorzugt zumindest 90% und insbesondere bevorzugt zumindest 85% restgeöffnet wird. Die Prozentangaben beziehen sich auf eine Wegstrecke, die die obere Klemmfläche 38 der Kluppe vom geschlossenen Zustand bis zum geöffneten Zustand zurücklegt.

Fig. 7 zeigt eine schematische Darstellung einer Teilöffnereinrichtung 150, wie sie für das Teilöffnen und/oder Restöffnen eingesetzt werden kann. Grundsätzlich können solche Teilöffnereinrichtungen in bestehende Öffnersysteme nachgerüstet werden oder teil eines erfindungsgemäßen Öffnersystems 100 sein.

Die Teilöffnereinrichtung 150umfasst eine Teilöffnerscheibe 160, diese kann wie in Fig. 6 gezeigt ausgebildet sein. Zudem umfasst die Teilöffnereinrichtung 150einen Antrieb 170. Der Antrieb kann ein direkter Antrieb oder ein indirekter Antrieb sein. Beispielsweise kann der Antrieb einen Synchronmotor sowie einen Riemenantrieb 172 oder eine Kette umfassen. Der Antrieb 170 treibt die Teilöffnerscheibe 160 rotierend an. Dabei kann der Antrieb 170 mit der Kluppen-Fahrgeschwindigkeit synchronisiert sein, derart, dass die Kontaktfläche 164 der Teilöffnerscheibe 160 gegenüber einer teils zu öffnenden Kluppe 28 einen Schlupf im Bereich von - 10% bis +10%, vorzugsweise im Bereich von -5% bis +5% und insbesondere im Bereich von 0% bis +3% aufweist.

Weiterhin umfasst die dargestellte Teilöffnereinrichtung 150eine Positioniervorrichtung 166, 167, die beispielsweise über Spindeltriebe 168, 169 die Position der Teilöffnerscheibe in TD-Richtung und/oder MD-Richtung R verstellen kann. Zudem kann die Position der Teilöffnerscheibe 160 in vertikaler Richtung Z verstellbar sein. Hierzu kann ein weitere Positioniervorrichtung (nicht dargestellt) vorgesehen sein.

Insbesondere kann die Teilöffnereinrichtung 150eine Steuereinrichtung 200 umfassen, die die Geschwindigkeit der Teilöffnerscheibe 160 verändern kann.

Figur 8 zeigt eine schematische Darstellung eines Verfahrens 1000 zum Öffnen von Kluppen 28, insbesondere von Kluppen 28 einer Reckanlage 10, wobei das Verfahren folgendes umfasst
Voröffnen 1100 von Kluppen, mittels zumindest einer Teilöffnereinrichtung 150 wie sie oben beschrieben ist;
Öffnen 1200 der Kluppen mit einer magnetischen Öffnereinrichtung 120, und
optional Zwangsöffnen 1300 der Kluppen mit einer mechanischen Zwangsöffnereinrichtung, nachdem die Kluppen an der Teilöffnereinrichtung und der magnetischen Öffnereinrichtung vorbeigeführt wurden, ohne dass eine erfolgreiche Öffnung erfolgte.

Es versteht sich, dass die Schritte 1100 und 1200 beim Voröffnen in der angegebenen Reihenfolge ausgeführt werden. Auch kann zuerst ein Voröffnen, dann ein Öffnen und Anschließend ein Restöffnen erfolgen. Das Zwangsöffnen ist hingegen den Schritten 1100 und 1200 nachgeschalten und wird - sofern implementiert - nur im Notfall ausgeführt. Ist die Teilöffnereinrichtung dazu eingerichtet, nur solche Kluppen, die einer Voröffnung bedürfen, um vollständig geöffnet zu werden vorzuöffnen (erster Anwendungsfall), können die Kluppen auch nur durch die magnetische Öffnereinrichtung 120 geöffnet werden. Dies trifft auf die Kluppen zu, die beim Vorbeiführen an der Teilöffnereinrichtung zumindest den vordefinierten Öffnungsgrad erreicht haben, also bis dahin ausreichend durch die Öffnereinrichtung geöffnet wurden. Die vorliegende Erfindung kann natürlich auch auf andere Weise als vorliegend dargelegt ausgeführt werden, ohne dass dadurch wesentliche Merkmale der Erfindung beeinträchtigt werden. Die vorliegenden Ausführungsformen sind in jeder Hinsicht als beispielhaft und nicht einschränkend zu betrachten, und alle Änderungen, die in den Bedeutungs- und Äquivalenzbereich der beigefügten Ansprüche fallen, sollen darin eingeschlossen sein.

### Bezugszeichenliste

- 10: Reckanlage
- 12: Materialbahn
- 14: Ofen
- 16: Antriebssystem
- 17: Schiene
- 18: Einlaufzone
- 19: Umlenkung
- 20: Auslaufzone
- 22: erste Zone (Vorheizzone)
- 24: zweite Zone (Reckzone)
- 26: dritte Zone (Wärmebehandlungszone)
- 28: Kluppeneinheit
- 30: Klemmvorrichtung
- 32: Hauptteil
- 34: Führungsteil
- 36: Grundkörper
- 37: untere Klemmfläche
- 38: obere Klemmfläche
- 39: Messerklappe
- 40: Befestigungsabschnitt
- 42: Grundkörper
- 44: Führungselement
- 46: Antriebselement
- 48: Aufnahme
- 100: Öffnersystem
- 120: magnetische Öffnereinrichtung
- 150: Teilöffnereinrichtung
- 160: Teilöffnerscheibe
- 161: Rotationsachse
- 162: Mantelfläche
- 164: Kontaktfläche
- 165: Kontaktpunkt
- 166: Positioniervorrichtung
- 167: Positioniervorrichtung
- 168: Spindeltrieb
- 169: Spindeltrieb
- 170: Antrieb
- 172: Riementrieb
- 190: Zwangsöffnereinrichtung
- 200: Steuereinrichtung
- 1000: Verfahren
- 1100: Teilöffnen (Vor- oder Restöffnen)
- 1200: Öffnen
- 1300: Zwangsöffnen
- A: Breite der Materialbahn am Ende der Reckzone
- E: Breite der Materialbahn in der Einlaufzone
- P: Primärrichtung der Zugrichtung
- R: Abzugsrichtung (MD-Richtung)
- S: Symmetrieachse
- TD: TD-Richtung
- X: Weg
- Z: Vertikale Richtung
- L: Länge des Wirkbereichs der magnetischen Öffnereinrichtung

## Patentansprüche

1. Teilöffnereinrichtung (150) für das Voröffnen von Kluppen (28), insbesondere von Kluppen einer Reckanlage (10), die Teilöffnereinrichtung (150) umfassend
zumindest eine Teilöffnerscheibe (160) und einen Antrieb (170), wobei der Antrieb (170) dazu eingerichtet ist die zumindest eine Teilöffnerscheibe (160) anzutreiben, und wobei
die Teilöffnerscheibe (160) eine Mantelfläche (162) umfasst, die eine umlaufende Kontaktfläche (164) aufweist, wobei die Kontaktfläche (164) dazu eingerichtet ist mit einer Messerklappe (39) einer Kluppe (28) einzugreifen, wenn
die Kluppe (28) an der Teilöffnerscheibe (160) vorbeigeführt wird, und wenn die Messerklappe (39) beim Vorbeiführen an der Teilöffnerscheibe einen Öffnungsgrad aufweist, der unterhalb eines vordefinierten Öffnungsgrad liegt, sodass die Kluppe (28) vorgeöffnet wird.

2. Teilöffnereinrichtung (150) nach Anspruch 1, wobei der Antrieb (170) dazu eingerichtet ist mit einer Kluppen-Fahrgeschwindigkeit synchronisiert zu werden, derart, dass die Kontaktfläche (164) der Teilöffnerscheibe (160) gegenüber einer teils zu öffnenden Kluppe (28) einen Schlupf im Bereich von -10% bis + 10%, vorzugsweise im Bereich von -5% bis +5% und insbesondere im Bereich von 0% bis +3% aufweist.

3. Teilöffnereinrichtung (150) nach Anspruch 1 oder 2, wobei
der Antrieb (170) ein direkter Antrieb ist, oder wobei
der Antrieb (170) ein indirekter Antrieb ist, der einen Riementrieb oder Kettenantrieb umfassen kann.

4. Teilöffnereinrichtung (150) nach einem der vorhergehenden Ansprüche, wobei eine Position der Teilöffnerscheibe in TD-Richtung und/oder MD-Richtung verstellbar ist, wobei die Teilöffnereinrichtung (150) vorzugsweise zumindest einen Positioniervorrichtung (166, 167) umfasst, zum Verstellen der Position der der Teilöffnerscheibe (160) in TD-Richtung und/oder MD-Richtung.

5. Teilöffnereinrichtung (150) nach einem der vorhergehenden Ansprüche, wobei die Position der Teilöffnerscheibe (160) in vertikaler Richtung verstellbar ist.

6. Teilöffnereinrichtung (150) nach einem der Ansprüche 4 oder 5, wobei die Teilöffnereinrichtung (150) weiterhin eine Steuereinrichtung (200) umfasst, die die Position der Teilöffnerscheibe (160) verändern kann.

7. Teilöffnereinrichtung (150) nach einem der vorhergehenden Ansprüche, wobei
die Kontaktfläche (164) der Teilöffnerscheibe einen konturierten Querschnitt aufweist, wobei der konturierte Querschnitt an einen Kontaktbereich einer Messerklappe (39) einer teils zu öffnenden Kluppe (28) angepasst ist, vorzugsweise derart, dass eine Position eines Kontaktpunktes in MD-Richtung unabhängig von der Filmranddicke der von der teils zu öffnenden Kluppe gehaltenen Materialbahn (12) ist.

8. Teilöffnereinrichtung (150) nach einem der vorhergehenden Ansprüche, wobei die Teilöffnerscheibe (160) eine polymere Teilöffnerscheibe ist, oder wobei
die Teilöffnerscheibe eine metallische Teilöffnerscheibe ist, und wobei optional die Mantelfläche (162) zumindest teilweise beschichtet ist, wobei die Beschichtung eine Polymerbeschichtung umfassen kann.

9. Öffnersystem (100) für das Öffnen von Kluppen (28), insbesondere von Kluppen einer Reckanlage, das Öffnersystem umfassend
zumindest eine Teilöffnereinrichtung (150) nach einem der Ansprüche 1 bis 8, und eine
magnetische Öffnereinrichtung (120), wobei die magnetische Öffnereinrichtung dazu eingerichtet ist die Kluppen (28) mittels Magnetkraft zu öffnen, wenn die Kluppen an der magnetische Öffnereinrichtung vorbeigeführt werden, und wobei
die zumindest eine Teilöffnereinrichtung (150) in MD-Richtung (R) so positioniert ist, um eine Voröffnung der Kluppen vorzunehmen.

10. Öffnersystem (100) nach Anspruch 9, wobei die zumindest eine Teilöffnereinrichtung (150) derart relativ zur magnetischen Öffnereinrichtung (120) positioniert ist, dass der Kontaktpunkt (165) der Teilöffnerscheibe (160) in MD-Richtung in einem vorderen Bereich, insbesondere in einem vorderen Drittel der magnetischen Öffnereinrichtung (120) positioniert ist.

11. Öffnersystem (100) nach Anspruch 9 oder 10, wobei die Teilöffnereinrichtung (150) derart relativ zur magnetischen Öffnereinrichtung (120) positioniert ist, dass der Kontaktpunkt (165) der Teilöffnerscheibe (160) in einem Abstand vor oder nach einem Punkt angeordnet ist, an dem eine maximale Magnetkraft auf die zu öffnenden Kluppen (28) wirkt.

12. Öffnersystem (100) nach einem der Ansprüche 9 bis 11, wobei das Öffnersystem weiterhin eine mechanische Zwangsöffnereinrichtung (190) umfasst, wobei die mechanische Zwangsöffnereinrichtung in Bewegungsrichtung der Kluppen nach der magnetischen Öffnereinrichtung (120) und der Teilöffnereinrichtung (150) angeordnet ist.

13. Reckanlage (10), insbesondere Quer-, Längs- und/oder Simultan-Reckanlage, umfassend
eine Vielzahl von Kluppen (28) zum Greifen einer zu reckenden Materialbahn (28), insbesondere Folie, und
ein Öffnersystem (100) nach einem der Ansprüche 9 bis 12.

14. Reckanlage (10) nach Anspruch 13, insbesondere Folienreckanlage, wobei die Reckanlage (10) eine Kluppen-Fahrgeschwindigkeit von größer 400 m/min, vorzugsweise größer 500 m/min und insbesondere bevorzugt größer 600 m/min aufweist.

15. Verfahren (1000) zum Öffnen von Kluppen, insbesondere von Kluppen (28) einer Reckanlage (10), wobei das Verfahren folgendes umfasst
Voröffnen (1100) von Kluppen, mittels zumindest einer Teilöffnereinrichtung (150) nach einem der Ansprüche 1 bis 8, wenn die Kluppe (28) an der Teilöffnerscheibe (160) vorbeigeführt wird, und wenn die Kluppe (28) beim Vorbeiführen an der Teilöffnerscheibe (160) einen Öffnungsgrad aufweist, der unterhalb eines vordefinierten Öffnungsgrad liegt, und
Öffnen (1200) der Kluppen mit einer magnetischen Öffnereinrichtung (120),
optional Zwangsöffnen (1300) der Kluppen mit einer mechanischen Zwangsöffnereinrichtung (190), nachdem die Kluppen an der Teilöffnereinrichtung (150) und der magnetischen Öffnereinrichtung (120) vorbeigeführt wurden, ohne dass eine erfolgreiche Öffnung erfolgte.
